(19) Europäisches Patentamt
European Patent Office
Office européen des brevets

(11) Veröffentlichungsnummer : **0 590 394 A1**

(12) # EUROPÄISCHE PATENTANMELDUNG

(21) Anmeldenummer : 93114628.6

(51) Int. Cl.⁵ : **G02B 6/42**

(22) Anmeldetag : **11.09.93**

(30) Priorität : **26.09.92 DE 4232326**

(43) Veröffentlichungstag der Anmeldung :
**06.04.94 Patentblatt 94/14**

(84) Benannte Vertragsstaaten :
**CH DE ES FR GB IT LI SE**

(71) Anmelder : **Alcatel SEL Aktiengesellschaft**
**Lorenzstrasse 10**
**D-70435 Stuttgart (DE)**

(72) Erfinder : **Luz, Gerhard**
**Zedernweg 10**
**D-74321 Bietigheim-Bissingen (DE)**
Erfinder : **Ulmer, Michael**
**Wildensteinstrasse 19**
**D-70469 Stuttgart (DE)**
Erfinder : **Feeser, Thomas**
**Buchbergstrasse 23/1**
**D-71735 Eberdingen (DE)**

(74) Vertreter : **Knecht, Ulrich Karl et al**
**Alcatel SEL AG, Patent- und Lizenzwesen,**
**Postfach 30 09 29**
**D-70449 Stuttgart (DE)**

(54) **Koppelanordnung für die Kopplung einer optischen Faser an ein optoelektronisches Modul.**

(57)   Bei einer Koppelanordnung (10) für die Kopplung einer optischen Faser (11) an ein optoelektronisches Modul (12), bspw. einen Halbleiter-Lasermodul ist die optische Faser (11) in einer Faserhülse (26) fixiert innerhalb einer Justierhülse (28) in axialer Richtung justierbar und festlegbar und die Justierhülse (28) durch Anlegen an und Verschieben gegenüber einem an einem Gehäuse (13) für das optoelektronische Modul (12) befestigten Justierring (19) in zur axialen Richtung senkrechten Richtungen justierbar und durch umfangsseitiges, zumindest punktweises Laserverschweißen festlegbar. Um bei der Kopplung einen über den zulässigen Toleranzbereich hinausgehenden Verzug in der Ebene senkrecht zur optischen Achse auch nach der der Justierung folgenden Laserschweißverbindung zwischen Justierhülse und Justierring zu vermeiden, ist vorgesehen, daß der Justierring (19) mit einer derart genauen Länge versehen zwischen Gehäuseaußenseite und Justierhülse (28) angeordnet ist, daß der Brennpunkt des abbildenden Bauelementes (14) und damit bei optimaler Kopplung der Endpunkt (32) der optischen Achse der vorzugsweise schräg angeschnittenen optischen Faser (11) innerhalb eines zulässigen Toleranzbereiches in der Justierebene (22,29) von Justierring (19) bzw. Justierhülse (28) liegt.

FIG.1

EP 0 590 394 A1

Die vorliegende Erfindung bezieht sich auf eine Koppelanordnung für die Kopplung einer optischen Faser an ein optoelektronisches Modul, bspw. einen Halbleiter-Lasermodul nach dem Oberbegriff des Patentanspruchs. Bei dem optoelektronischen Modul kann es sich statt um einen optischen Sender auch um einen optischen Empfänger, wie bspw. ein Halbleiter-Empfängermodul handeln.

Eine derartige Koppelanordnung ist in der älteren (nicht vorveröffentlichten) deutschen Patentanmeldung P 41 40 434.3 beschrieben. Bei dieser Koppelanordnung wird die Optik des optoelektronischen Moduls zunächst im Hinblick auf die photowirksame Fläche einer optoelektronischen Schaltungsanordnung justiert, wobei die optischen Achsen zu Schaltungsanordnung einerseits und optischer Faser andererseits etwa senkrecht aufeinanderstehen. Nach dieser Justage und Fixierung der Optik wird u.a. eine Justierung der optischen Faser in axialer Richtung gegenüber der Optik vorgenommen, so daß die Endfläche der optischen Faser einen mehr oder weniger großen Abstand zur Verbindungsebene von Justierhülse und Justierring besitzt. Es ist bekannt, daß bei der Fixierung der optischen Faser in der Koppelanordnung infolge Erwärmung und Schrumpfen des verwendeten Materials beim Flüssig/Fest-Fasenübergang ein mechanischer Verzug auftritt. Dieser mechanische Verzug ist dann unerwünscht, wenn er in der Ebene senkrecht zur axialen Richtung stattfindet. Aus diesem Grunde wird bei der bekannten Koppelanordnung ein stumpfes Aneinandersetzen von Justierhülse und Justierring mit einer zumindest punktweisen umfangsseitigen Gefügeverbindung, wie bspw. Laserschweißen vorgenommen. Bei dieser Verbindungskonstruktion ging man bisher davon aus, daß sich nur ein Verzug in axialer Richtung ergibt, der relativ unkritisch ist, da hier in einem großen Toleranzbereich von ca. +/- 30 µm gearbeitet werden kann. Es hat sich jedoch herausgestellt, daß sich bei dieser Koppelanordnung trotz optimaler Justierung der optischen Faser in den drei Raumrichtungen gegenüber dem optoelektronischen Modul nach der Gefügeverbindung ein Verzug der Endfläche der optischen Faser in der zur axialen Richtung senkrechten Ebene ergeben hat, welcher Verzug unter ungünstigen Umständen im Bereich von 10-30 µm betragen hat. In dieser Ebene kann jedoch für eine Faserankopplung hoher Qualität lediglich ein Verzug von maximal 2 µm toleriert werden, da ansonsten der Koppelwirkungsgrad extrem schlecht wird.

Aufgabe der vorliegenden Erfindung ist es deshalb, eine Koppelanordnung für die Kopplung einer optischen Faser an ein optoelektronisches Modul der eingangs genannten Art zu schaffen, bei der ein über den zulässigen Toleranzbereich hinausgehender Verzug in der Ebene senkrecht zur optischen Achse auch nach der der Justierung folgenden Gefügeverbindung zwischen Justierhülse und Justierring vermieden ist.

Zur Lösung dieser Aufgabe sind bei einer Koppelanordnung für die Kopplung einer optischen Faser an ein optoelektronisches Modul der genannten Art die im Patentanspruch angegebenen Merkmale vorgesehen.

Durch die konstruktive Auslegung der Koppelanordnung ist es möglich, den unvermeidbaren Verzug der optischen Achse der optischen Faser gegenüber der optischen Achse des optoelektronischen Moduls in Richtungen senkrecht zur optischen Achse in vernachlässigbaren Grenzen zu halten, so daß der bei der Justage ermittelte Koppelwirkungsgrad auch nach der Wärmegefügeverbindung von Justierhülse und Justierring erhalten bleibt. Auf diese einfache Weise werden die für eine Kopplung hoher Qualität notwendigen Toleranzen erreicht. Eine Nachjustage zu einer möglichen Reduzierung des Verzugs ist nicht notwendig.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:

Figur 1     in schematischer Darstellung einen teilweise abgebrochenen Längsschnitt einer Koppelanordnung für die Kopplung einer optischen Faser an ein optoelektronisches Modul gemäß einem bevorzugten Ausführungsbeispiel vorliegender Erfindung und

Figur 2     in gegenüber der Fig. 1 vergrößerter und hinsichtlich des Spaltes übertriebener Darstellung den Bereich der Koppelanordnung, der der Justierung und Fixierung dient, zur Erläuterung der der Erfindung zugrundeliegenden Problematik.

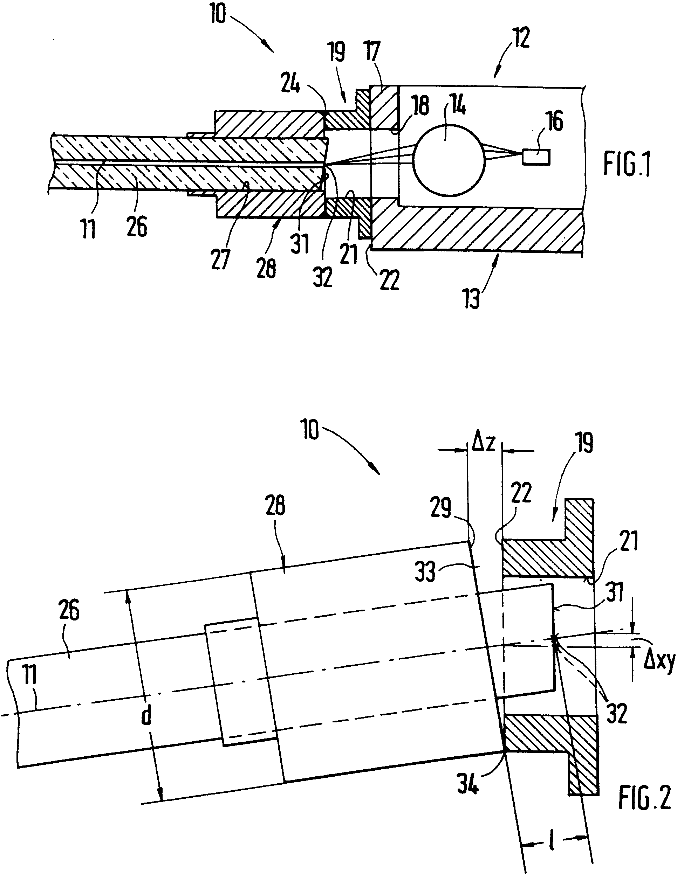

Gemäß Fig. 1 erfolgt bei der erfindungsgemäßen Koppelanordnung 10 die Kopplung einer optischen Faser 11 mit einem bzw. an ein optoelektronisches Modul 12. Von dem optoelektronischen Modul 12 ist ein Teil eines Gehäuses 13 dargestellt, in welchem ein schematisch dargestelltes, abbildendes Bauelement, bspw. in Form einer Kugellinse 14, und ein optoelektronisches Bauelement, bspw. in Form eines Halbleiter-Lasers 16, aufgenommen sind. Die beiden Bauelemente 14 und 16 sind optisch zueinander ausgerichtet und innerhalb des Gehäuses 13 fixiert. Die in Fig. 1 dargestellte Seitenwand 17 des Gehäuses 13 ist mit einer Durchgangsöffnung 18 versehen und ist an ihrer der optischen Faser 11 zugewandten Außenseite mit einem Justierring 19 fest verbunden, dessen Durchgangsbohrung 21 mit der Durchgangsöffnung 18 in der Gehäuseseitenwand 17 fluchtet.

Die optische Faser 11 ist in einer Faserhülse 26 aufgenommen und die Faserhülse 26 ist innerhalb der Durchgangsbohrung 27 einer Justierhülse 28 in axialer Richtung durch Verschieben justierbar und im Bereich des dem Gehäuse 13 abgewandten Endes der Justierhülse 28 an dieser mittels vorzugsweise Laserschweißen fixierbar.

EP 0 590 394 A1

Der Justierring 19 und die Justierhülse 28 besitzen jeweils einander zugewandt eine plane Stirnfläche 22 bzw. 29 mit im wesentlichen demselben Außendurchmesser, welche Stirnflächen 22 und 29 stumpf aneinanderliegen. In diesem Zustand ist die Justierhülse 26 mit der optischen Faser 11 in den zueinander senkrechten Richtungen der zur axialen Richtung bzw. zur optischen Achse senkrechten Ebene durch Verschieben gegenüber dem Justierring 19 justierbar ist. Nach dem Justieren soll der Brennpunkt des abbildenden Bauelementes 14 im Endpunkt 32 der optischen Achse auf der schräg angeschnittenen Eintritts- bzw. Endfläche 31 der optischen Faser 11 liegen, um einen hohen Koppelwirkungsgrad zu erhalten. Danach wird die Justierhülse 28 an den Justierring 19 durch eine zumindest punktweise und umfangsseitige Warmfügeverbindung, vorzugsweise Laserschweißen befestigt bzw. fixiert.

Es hat sich bei dieser Fixierung durch die umfangsseitige Gefügeverbindung von Justierhülse 28 und Justierring 19 herausgestellt, daß sich ein Verzug der optischen Achse der optischen Faser 11 gegenüber dem optischen Brennpunkt des abbildenden Bauelementes 14 derart ergeben hat, daß der Koppelwirkungsgrad unzulässig abnahm, obwohl bei der punktweisen Warmfügeverbindung, also vorzugsweise dem Laserschweißen, über den Umfang durch Festhalten der Justierhülse 28 gegenüber dem Justierring 19 ein Verzug, der diese Auswirkungen hat, an sich hätte ausgeschlossen sein müssen. Ein Verzug der Justierhülse 28 gegenüber dem Justierring 19 in axialer Richtung (z-Achse) ist aufgrund der konstruktiven Ausführung des stumpfen Aneinandersetzen von Justierhülse und Justierring aufgrund des Erwärmungs- und Abkühlungsprozesses vorgegeben nicht jedoch ein Verzug senkrecht hierzu in der xy-Ebene. Ein Verzug in der z-Achse ist relativ unkritisch, da hier Toleranzen im Bereich von +/- 30 $\mu$m zulässig sind. In der xy-Ebene senkrecht zur optischen Achse ist jedoch nur ein Verzug $\Delta xy$ von maximal 2 um zu tolerieren, während es sich teilweise unter ungünstigen Umständen um einen Verzug $\Delta xy$ im Bereich von 10-30 $\mu$m gehandelt hat. Es hat sich herausgestellt, daß, wie in Fig. 2 in übertriebener Weise dargestellt ist, sich zwischen der planen Stirnfläche 22 des Justierrings 19 und der planen Stirnfläche 29 der Justierhülse 28 unvermeidlich ein keilförmiger Luftspalt 33 aufgrund Herstellungstoleranzen bei der mechanischen Fertigung von Justierring 19, Justierhülse 28 und einer Koppelvorrichtung zur Handhabung der Einzelteile bei der Justierung ergibt. Dieser keilförmige Luftspalt 33 kann unterschiedliche Größen bzw. Weiten $\Delta z$ besitzen. Dies bedeutet, daß die Justierhülse 28 in einem bestimmten Bereich 34 mit ihrer planen Stirnfläche 29 an der planen Stirnfläche 22 des Justierrings 19 anliegt und in einem anderen Bereich einen keilförmigen Luftspalt 33 freiläßt. Wird nun die vorerwähnte umfangsseitige Gefügeverbindung, also das bspw. punktweise Laserverschweißen durchgeführt, ergibt sich durch Wärmedehnung und -kontraktion, daß die Justierhülse 28 um den Auflagepunkt bzw. -bereich 34 derart kippt, daß sich der keilförmige Luftspalt 33 verringert. Befindet sich nun noch aufgrund der axialen Justierung die Faserendfläche 31 der optischen Faser 11 in einem bestimmten Abstand 1 von der Stirnfläche 39 der Justierhülse 28 entfernt, ist ersichtlich, daß sich die Kippbewegung der Justierhülse 28 gegenüber dem Justierring 19 in einem Verzug des optischen Achsenendpunkts der Faserendfläche 31 sowohl in axialer Richtung als auch in einer oder beider Richtungen senkrecht zur optischen Achse auswirkt. Dies bedeutet, daß sich in der zur optischen (z-)Achse senkrechten xy-Ebene ein Verzug $\Delta xy$ nach dem umfangsseitigen punktweisen Laserverschweißen gegenüber dem Zustand nach dem Justieren jedoch vor dem Laserverschweißen ergibt.

Unter einer vereinfachten geometrischen Betrachtungsweise (Strahlensatz) bedeutet dies, daß der seitliche Verzug in $\Delta xy$ Richtung der x- und/oder y-Richtung zu

$$\Delta xy : \Delta z = l : d$$

bzw.

$$\Delta xy = \Delta z \cdot l/d$$

ergibt. Dabei ist $\Delta z$ der Abstand der Faserendfläche 31 von der planen Stirnfläche 29 der Justierhülse 28, l die Größe des Luftspalts 33 und d der Außendurchmesser der Justierhülse 28. Daraus ist ersichtlich, daß der Abstand 1 der Faserendfläche 31 von der planen Stirnfläche 29 der Justierhülse 28 möglichst klein, im Idealfall = O sein sollte, um unabhängig von der Größe $\Delta z$ des auftretenden Luftspalt 33 zwischen den beiden Stirnflächen 22 und 29 einen möglichst geringen oder gar keinen seitlichen Verzug $\Delta xy$ in x- und/oder y-Richtung zu erhalten. Dies bedeutet mit anderen Worte, daß dann, wenn bspw. ein maximaler möglicher Verzug von $\Delta xy = 2$ $\mu$m zulässig ist, bei einem Justierhülsendurchmesser d = 4 mm eine Toleranz hinsichtlich des Abstandes 1 von höchstens 0 +/- 0,4 mm bei üblichen standardisierten Abmessungen derartiger Koppelanordnungen zulässig ist. Die Koppelanordnung 10 ist daher konstruktiv derart ausgestaltet, daß der Justierring 19 eine zum Erreichen dieser Toleranz exakte Länge aufweist, so daß der Brennpunkt des abbildenden Bauelementes 14 innerhalb der vorgegebenen Toleranzen in dem Endpunkt 32 der optischen Achse in der schrägen Endfläche 31 der optischen Faser 11 liegt. Auf diese Weise ist konstruktiv vorgegeben, daß dieser optische fiktive Punkt 32 der Endfläche 31 der optischen Faser 11 innerhalb der zulässigen Toleranz genau in der Ebene der planen Stirnfläche 29 der Justierhülse 28 auch nach der Justage innerhalb der vorgegebenen Toleranzen liegt. Es ist dann unerheblich, welche Größe $\Delta z$ der Luftspalt 33 hat, der Verzug in $\Delta x$ oder $\Delta y$ nach dem Laserschweißen ist notwendigerweise innerhalb der zulässigen Toleranz, innerhalb der nach wie vor ein optimaler Koppelwirkungsgrad der Koppelanordnung 10 erreicht ist.

**Patentansprüche**

1.  Koppelanordnung (10) für die Kopplung einer optischen Faser (11) an ein optoelektronisches Modul (12), bspw. einen Halbleiter-Lasermodul, bei der die optische Faser (11) in einer Faserhülse (26) fixiert innerhalb einer Justierhülse (28) in axialer Richtung justierbar und festlegbar ist und bei der die Justierhülse (28) durch Anlegen an und Verschieben gegenüber einem an einem Gehäuse (13) für das optoelektronische Modul (12) befestigten Justierring (19) in zur axialen Richtung senkrechten Richtungen justierbar und durch umfangsseitiges, zumindest punktweises Warmfügeverbinden, vorzugsweise Laserverschweißen festlegbar ist, **dadurch gekennzeichnet,** daß der Justierring (19) mit einer derart genauen Länge versehen zwischen Gehäuseaußenseite und Justierhülse (28) angeordnet ist, daß der Brennpunkt des abbildenden Bauelementes (14) und damit bei optimaler Kopplung der Endpunkt (32) der optischen Achse der vorzugsweise schräg angeschnittenen optischen Faser (11) innerhalb eines zulässigen Toleranzbereiches in der Justierebene (22,29) von Justierring (19) bzw. Justierhülse (28) liegt.

FIG.1

FIG.2

Europäisches
Patentamt

**EUROPÄISCHER RECHERCHENBERICHT**

Nummer der Anmeldung

EP 93 11 4628

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-H-H551 (G. M. CHAOUI ET AL.) * Spalte 3, Zeile 15 - Zeile 42; Abbildung 1 * | 1 | G02B6/42 |
| X,P | US-A-5 216 730 (J. A. DEMERITT ET AL.) * Spalte 7, Zeile 49 - Spalte 8, Zeile 8 * | 1 | |
| A | GB-A-2 234 088 (MITSUBISHI) * Seite 5, Zeile 27 - Seite 6, Zeile 7 * | 1 | |
| A | IBM TECHNICAL DISCLOSURE BULLETIN Bd. 34, Nr. 4B, September 1991, NEW YORK US Seiten 397 - 398 'FDDI/SC LOW COST HIGH PERFORMANCE OPTICAL SUB-ASSEMBLY' * das ganze Dokument * | 1 | |
| A | 1989 PROCEEDINGS 39th ELECTRONIC COMPONENTS CONFERENCE May 22-24, Houston ,Texas; page 372-373 G. M. CHAOUI et al. : 'A METHOD OF ACHIEVING IMPROVED RADIAL ALIGNMENT IN AN OPTICAL PACKAGE UTILIZIN LASER WELDING TECHNIQUES' * das ganze Dokument * | 1 | **RECHERCHIERTE SACHGEBIETE (Int. Cl.5)** G02B |

Der vorliegende Recherchenbericht wurde für alle Patentansprüche erstellt

| Recherchenort | Abschlußdatum der Recherche | Prüfer |
|---|---|---|
| BERLIN | 29 DEZEMBER 1993 | FUCHS R. |